# EUROPÄISCHE PATENTANMELDUNG

(11) **EP 4 435 399 A1**
(43) Veröffentlichungstag der Anmeldung: **25.09.2024**
(21) Anmeldenummer: 24165462.3
(22) Anmeldetag: 22.03.2024
(51) Int. Cl.: G01M 3/02, G01M 3/28

(54) **KAPPE, ANORDNUNG, VERWENDUNG UND VERFAHREN**

(30) Priorität: 22.03.2023 DE 202023101424 U
(71) Anmelder: Bänninger Kunststoff-Produkte GmbH, 35447 Reiskirchen (DE)
(72) Erfinder: STAMM, Christoph, 35633 Lahnau (DE); ERTL, Hendrik, 35463 Fernwald (DE)
(74) Vertreter: advotec.

(57) **Zusammenfassung**

Die Erfindung betrifft eine Kappe (12) zur zumindest zeitweiligen Anordnung an einem Kunststoff-Rohrleitungselement (11), wobei die Kappe einen Kunststoff-Kappenkörper (13) aufweist, welcher bei der Anordnung der Kappe an dem Rohrleitungselement eine Öffnung des Rohrleitungselements verschließt, wobei die Kappe einen herstellerseitig an dem Kappenkörper angeordneten Anschlussstutzen (17) aufweist, welcher zum Anschließen einer Vorrichtung zur Durchführung einer Druckprüfung ausgebildet ist.

## Beschreibung

Die Erfindung betrifft eine Kappe zur zumindest zeitweiligen Anordnung an einem Kunststoff-Rohrleitungselement, wobei die Kappe einen Kunststoff-Kappenkörper aufweist, welcher bei der Anordnung der Kappe an dem Rohrleitungselement eine Öffnung des Rohrleitungselements verschließt. Weiter betrifft die Erfindung eine Anordnung, umfassend ein Rohrleitungssystem aus zumindest zwei miteinander verbundenen Kunststoff-Rohrleitungselementen und eine derartige an einem der Rohrleitungselemente angeordnete Kappe. Ferner betrifft die Erfindung eine Verwendung einer derartigen Kappe zur zumindest zeitweiligen Anordnung an einem Kunststoff-Rohrleitungselement zwecks Durchführung einer Druckprüfung. Letztlich betrifft die Erfindung ein Verfahren zur Durchführung einer Druckprüfung bei einem Rohrleitungssystem, wobei an zumindest einem Kunststoff-Rohrleitungselement des Rohrleitungssystems zumindest zeitweilig eine Kappe angeordnet wird, derart, dass eine Öffnung des Rohrleitungselements von einem Kunststoff-Kappenkörper der Kappe verschlossen wird.

Eine Kappe der eingangs bezeichneten Art ist aus dem Stand der Technik hinlänglich bekannt und wird regelmäßig zwecks Durchführung einer Druckprüfung, welche gemeinhin auch als Druckprobe oder Abdrücken bezeichnet wird, bei einem Rohrleitungssystem aus typischerweise einer Mehrzahl von miteinander verbundenen Kunststoff-Rohrleitungselementen, welche zur Leitung eines Fluides, beispielsweise Wasser, vorgesehen sind, an einem der Rohrleitungselemente angeordnet, derart, dass ein Kunststoff-Kappenkörper der Kappe eine Öffnung des Rohrleitungselements fluiddicht verschließt. Da die Kappe herstellerseitig keinen Anschlussstutzen zum Anschließen einer Vorrichtung zur Durchführung einer Druckprüfung aufweist, ist es dann stets erforderlich, den Kappenkörper anwenderseitig mit einer Bohrung zu versehen, in welcher nachfolgend ein derartiger Anschlussstutzen angeordnet bzw. befestigt wird. Über den Anschlussstutzen kann das Rohrleitungselement bzw. Rohrleitungssystem dann mit einem Fluid befüllt und ein gewünschter Prüfdruck in dem Rohrleitungssystem aufgebaut werden. Insbesondere ermöglicht eine derartige Druckprüfung dann auch eine Dichtheitsprüfung und Leckbestimmung bei dem Rohrleitungssystem.

Nachteilhaft an der aus dem Stand der Technik vorbekannten Kappe ist, dass das anwenderseitige Anbringen eines Anschlussstutzens an dem Kappenkörper aufwendig bzw. zeitintensiv ist. Zudem weisen die anwenderseitig umgebauten Kappen keine gleichbleibende Qualität auf, was sich insbesondere in einer variablen Festigkeit der Kappen niederschlägt.

Weiter ist es aus dem Stand der Technik bekannt, über ein sogenanntes Sattelstück einen Anschlussstutzen umfangseitig an einem Rohrleitungselement anzubringen, was jedoch ebenfalls aufwendig ist.

Der vorliegenden Erfindung liegt daher die Aufgabe zugrunde, eine Kappe, eine Anordnung, eine Verwendung und ein Verfahren vorzuschlagen, die bzw. das eine vereinfachte Druckprüfung bei einem Rohrleitungssystem ermöglicht.

Diese Aufgabe wird durch eine Kappe mit den Merkmalen des Anspruchs 1, eine Anordnung mit den Merkmalen des Anspruchs 9, eine Verwendung mit den Merkmalen des Anspruchs 10 und ein Verfahren mit den Merkmalen des Anspruchs 11 gelöst.

Die erfindungsgemäße Kappe zur zumindest zeitweiligen Anordnung an einem Kunststoff-Rohrleitungselement weist einen Kunststoff-Kappenkörper auf, welcher bei der Anordnung der Kappe an dem Rohrleitungselement eine Öffnung des Rohrleitungselements verschließt, wobei die Kappe einen herstellerseitig an dem Kappenkörper angeordneten Anschlussstutzen aufweist, welcher zum Anschließen einer Vorrichtung zur Durchführung einer Druckprüfung ausgebildet ist.

Die erfindungsgemäße Kappe ist zur zumindest zeitweiligen bzw. vorübergehenden Anordnung an einem aus Kunststoff ausgebildeten Rohrleitungselement eines Rohrleitungssystems zwecks Durchführung einer Druckprüfung bei dem Rohrleitungssystem, welches neben dem Rohrleitungselement zumindest ein weiteres Kunststoff-Rohrleitungselement umfasst, mit welchem das Rohrleitungselement verbunden ist, vorgesehen. Das Rohrleitungselement seinerseits, welches im einfachsten Fall ein Rohr bzw. eine Rohrleitung sein kann, dient zur Leitung von einem Fluid, das heißt einer Flüssigkeit, insbesondere Wasser, und/der einem Gas, und weist in, insbesondere endseitig an dem Rohrleitungselement gelegenen, Verbindungsbereichen des Rohrleitungselements, welche dazu geeignet bzw. vorgesehen sind, das Rohrleitungselement mit einem weiteren Rohrleitungselement zu verbinden, jeweils eine Öffnung auf, durch die das Fluid aus dem Rohrleitungselement in das mit diesem verbindbare bzw. verbundene weitere Rohrleitungselement oder aus dem weiteren Rohrleitungselement in das mit diesem verbindbare bzw. verbundene Rohrleitungselement gelangen kann. Typischerweise weist ein Rohrleitungselement zumindest zwei derartige Verbindungsbereiche bzw. Öffnungen auf. Beispielsweise weist ein einfaches Rohr genau zwei derartige Verbindungsbereiche bzw. Öffnungen auf. Die erfindungsgemäße Kappe weist einen aus Kunststoff ausgebildeten Kappenkörper auf, welcher bei der Anordnung der Kappe an dem Rohrleitungselement bzw. einem Verbindungsbereich des Rohrleitungselements eine derartige Öffnung des Rohrleitungselements fluiddicht verschließt. Weiter weist die erfindungsgemäße Kappe einen herstellerseitig an dem Kappenkörper angeordneten Anschlussstutzen aufweist, welcher zum Anschließen einer Vorrichtung zur Durchführung einer Druckprüfung ausgebildet ist. Demnach ist bereits herstellerseitig ein an dem Kappenkörper angeordneter Anschlussstutzen zum Anschließen einer Vorrichtung zur Durchführung einer Druckprüfung vorgesehen, so dass eine anwenderseitige Anbringung eines derartigen Anschlussstutzens an dem Kappenkörper vorteilhaft entfällt. Insbesondere kann dadurch Zeit eingespart werden. Zudem ermöglich die vollständig herstellerseitige Herstellung der Kappe eine serielle Herstellung der Kappe mit einer gleichbleibenden Qualität bzw. Festigkeit. Über den Anschlussstutzen kann das Rohrleitungselement bzw. Rohrleitungssystem dann mit einem Fluid befüllt und ein gewünschter Prüfdruck in dem Rohrleitungssystem aufgebaut werden. Die Druckprüfung ermöglicht dann auch eine Dichtheitsprüfung und Leckbestimmung bei dem Rohrleitungssystem. Unter der Vorrichtung zur Durchführung der Druckprüfung ist jede Vorrichtung zu verstehen, die zur Durchführung der Druckprüfung geeignet ist. Beispielsweise kann die Vorrichtung zur Durchführung der Druckprüfung eine einerends an den Anschlussstutzen anschließbare Leitung bzw. ein einerends an den Anschlussstutzen anschließbarer Schlauch sein, welche bzw. welcher anderenends an eine Fluidversorgungseinrichtung, insbesondere eine Wasserquelle, anschließbar sein kann und über die bzw. den das Fluid in das Rohrleitungselement bzw. das Rohrleitungssystem gelangen kann. Dabei kann die Leitung bzw. der Schlauch an eine Pumpe bzw. einen Kompressor, welche bzw. welcher Bestandteil der Vorrichtung zur Durchführung der Druckprüfung sein kann, angeschlossen sein. Weiterhin können Entlüftungsventile und/oder Anzeigearmaturen für einen Druck und/oder eine Temperatur an den Anschlussstutzen anschließbar sein. Im Ergebnis ermöglich die erfindungsgemäße Kappe eine vereinfachte Durchführung einer Druckprüfung bei einem Rohrleitungssystem.

Vorteilhafterweise kann die Kappe dazu ausgebildet sein, stoffschlüssig, insbesondere durch Heizelementstumpfschweißen und/oder Heizwendelschweißen, und/oder kraftschlüssig bzw. klemmschlüssig, insbesondere mittels einer Klemmkupplung, welche die Kappe umfassen kann, an dem Rohrleitungselement befestigt zu werden.

Vorteilhafterweise kann die Kappe dazu ausgebildet sein, an dem aus einem Polyolefinmaterial, insbesondere PE 100, PE 100 RC, PE-RT, PP-B, PP-H, PP-R und/oder PP-RCT, und/oder PA-U ausgebildeten Rohrleitungselement angeordnet zu werden. Das Rohrleitungselement kann also aus den vorstehend genannten Materialien ausgebildet sein. Das Material PA-U bzw. PA Unplastified wird auch als PA180 bzw. PA11 bzw. PA12 bezeichnet.

Vorteilhafterweise kann die Kappe dazu ausgebildet sein, an dem ein Standard Dimension Ratio (SDR) von 5, 7,4, 11, 13,6, 17, 17,6, 26 oder 33 aufweisenden Rohrleitungselement angeordnet zu werden. Das Rohrleitungselement kann also das Standard Dimension Ratio mit den vorstehend genannten Werten aufweisen. Das Standard Dimension Ratio ist eine zur Klassifizierung von Kunststoff-Rohrleitungselementen gebräuchliche Kennzahl, die ein Verhältnis zwischen einem Außendurchmesser eines Rohrleitungselements und einer Wanddicke eines Rohrleitungselements beschreibt. Vorzugsweise kann die Kappe dazu ausgebildet sein, an dem ein Standard Dimension Ratio (SDR) von 11 oder 17 aufweisenden Rohrleitungselement angeordnet zu werden. Die Kappe bzw. der Kappenkörper selbst kann dazu zumindest abschnittsweise alle vorstehend genannten Werte für das Standard Dimension Ratio aufweisen.

Vorteilhafterweise kann der Kappenkörper abschnittsweise konvex ausgebildet sein bzw. einen konvexen Abschnitt aufweisen. Vorzugsweise kann der Kappenkörper axialseitig konvex bzw. gewölbt ausgebildet sein. Beispielsweise kann der Kappenkörper dazu kegelstumpfartig oder kugelkalottenartig ausgebildet sein. In einem Maximum einer konvexen Fläche des konvexen Abschnitts kann dann in vorteilhaft gut zugänglicher Weise der Anschlussstutzen angeordnet sein. Neben dem konvexen Abschnitt kann der Kappenkörper vorteilhafterweise einen zylinderförmigen Abschnitt aufweisen. Vorzugsweise ist der zylinderförmige Abschnitt dann einstückig mit dem konvexen Abschnitt ausgebildet.

Vorteilhafterweise kann die Kappe bzw. der Kappenkörper rotationssymmetrisch ausgebildet sein. Im Querschnitt kann die Kappe bzw. der Kappenkörper, wie auch das Rohrleitungselement, eine runde bzw. kreisförmige Geometrie aufweisen. Ein Durchmesser der Kappe bzw. des Kappenkörpers kann zumindest in einem Verbindungsbereich des Kappenkörpers, der zu Verbindung der Kappe bzw. des Kappenkörpers mit dem Rohrleitungselement bzw. dessen Verbindungsbereich vorgesehen sein kann, einem Durchmesser des Rohrleitungselements bzw. dessen Verbindungsbereichs entsprechen.

Vorteilhafterweise kann der Kappenkörper aus einem Polyolefinmaterial, insbesondere PE 100, PE 100 RC, PE-RT, PP-B, PP-H, PP-R und/oder PP-RCT, und/oder PA-U ausgebildet sein. Der Kappenkörper kann vorteilhafterweise aus demselben Kunststoff bzw. Kunststoffmaterial ausgebildet sein wie das Rohrleitungselement.

Vorteilhafterweise kann der Anschlussstutzen ein Gewinde aufweisen. Das Gewinde kann als ein Innengewinde oder ein Außengewinde ausgebildet sein. Weiter kann das Gewinde zumindest teilweise aus einem Metall ausgebildet sein. Alternativ zu einem Gewindeanschluss ist auch ein kraftschlüssiger bzw. klemmschlüssiger Anschluss über eine Klemmkupplung möglich, welche der Anschlussstutzen aufweisen kann.

Vorteilhafterweise kann der Anschlussstutzen stoffschlüssig, insbesondere durch Heizelementschweißen und/oder Heizwendelschweißen, und/oder kraftschlüssig bzw. klemmschlüssig, insbesondere mittels einer Klemmkupplung, welche die Kappe umfassen kann, an dem Kappenkörper befestigt sein. Der Anschlussstutzen kann dann zumindest teilweise aus einem Kunststoff ausgebildet sein, welcher derselbe Kunststoff sein kann wie der Kunststoff, aus dem der Kappenkörper ausgebildet ist. Der Kappenkörper kann eine, vorzugsweise zentrale, Bohrung aufweisen, in welcher der Anschlussstutzen befestigt sein kann. Die Bohrung kann auch nicht zentral sein.

Die erfindungsgemäße Anordnung umfasst ein Rohrleitungssystem aus zumindest zwei miteinander verbundenen Kunststoff-Rohrleitungselementen und eine erfindungsgemäße an einem der Rohrleitungselemente angeordnete Kappe. Die Anordnung kann eine Mehrzahl von Kunststoff-Rohrleitungselementen umfassen.

Erfindungsgemäß wird eine Kappe zur zumindest zeitweiligen Anordnung an einem Kunststoff-Rohrleitungselement zwecks Durchführung einer Druckprüfung verwendet, wobei die Kappe einen Kunststoff-Kappenkörper aufweist, welcher bei der Anordnung der Kappe an dem Rohrleitungselement eine Öffnung des Rohrleitungselements verschließt, wobei die Kappe einen an dem Kappenkörper angeordneten Anschlussstutzen aufweist, welcher zum Anschließen einer Vorrichtung zur Durchführung der Druckprüfung ausgebildet ist.

Weitere vorteilhafte Ausführungsformen der Verwendung ergeben sich aus den Merkmalsbeschreibungen der auf den Vorrichtungsanspruch 1 rückbezogenen Unteransprüche.

Bei dem erfindungsgemäßen Verfahren zur Durchführung einer Druckprüfung bei einem Rohrleitungssystem wird an zumindest einem Kunststoff-Rohrleitungselement des Rohrleitungssystems zumindest zeitweilig eine Kappe angeordnet, derart, dass eine Öffnung des Rohrleitungselements von einem Kunststoff-Kappenkörper der Kappe verschlossen wird, wobei an einem herstellerseitig an dem Kappenkörper angeordneten Anschlussstutzen der Kappe eine Vorrichtung zur Durchführung einer Druckprüfung angeschlossen wird, wobei mittels der Vorrichtung eine Druckprüfung durchgeführt wird.

Erfindungsgemäß ist der Anschlussstutzen schon herstellerseitig an dem Kappenkörper angeordnet. Der Anschlussstutzen kann stoffschlüssig, insbesondere durch Heizelementschweißen und/oder Heizwendelschweißen, und/oder kraftschlüssig, insbesondere mittels einer Klemmkupplung, an dem Kappenkörper befestigt sein. In einer nicht erfindungsgemäßen Ausführungsform des Verfahrens kann der Anschlussstutzen anwenderseitig kraftschlüssig, insbesondere mittels einer Klemmkupplung, welche Bestandteil der Kappe bzw. eines Sets sein kann, an dem Kappenkörper befestigt werden.

Zu den vorteilhaften Wirkungen des erfindungsgemäßen Verfahrens wird auf die Vorteilsbeschreibung der erfindungsgemäßen Kappe verwiesen.

Vorteilhafterweise kann die Kappe stoffschlüssig, insbesondere durch Heizelementstumpfschweißen und/oder Heizwendelschweißen, und/oder kraftschlüssig, insbesondere mittels einer Klemmkupplung, an dem Rohrleitungselement befestigt werden.

In einer Ausführungsform des Verfahrens kann das Rohrleitungselement mit einem weiteren Rohrleitungselement des Rohrleitungssystems verbunden und nachfolgend die Kappe an dem Rohrleitungselement angeordnet werden. Mit anderen Worten kann zuerst das Rohrleitungselement dem Rohrleitungssystem hinzugefügt und dann die Kappe an dem Rohrleitungselement angeordnet werden.

In einer dazu alternativen Ausführungsform des Verfahrens kann die Kappe an dem Rohrleitungselement angeordnet und nachfolgend das Rohrleitungselement mit einem weiteren Rohrleitungselement des Rohrleitungssystems verbunden werden. Mit anderen Worten kann zuerst die Kappe an dem Rohrleitungselement angeordnet und dann das Rohrleitungselement dem Rohrleitungssystem hinzugefügt werden.

In einer Ausführungsform des Verfahrens kann die Kappe nach der Durchführung der Druckprüfung von dem Rohrleitungselement, insbesondere durch eine spanende Bearbeitung, entfernt bzw. abgetrennt werden. Beispielsweise kann die Kappe durch Sägen von dem Rohrleitungselement abgetrennt werden.

In einer dazu alternativen Ausführungsform des Verfahrens kann der Anschlussstutzen der an dem Rohrleitungselement dauerhaft verbleibenden Kappe mittels eines Verschlussdeckels der Kappe dauerhaft verschlossen werden. In diesem Fall kann die Kappe als Rohrleitungselementabschluss dienen. Der Verschlussdeckel kann ein Schraubverschlussdeckel sein.

Weitere vorteilhafte Ausführungsformen des Verfahrens ergeben sich aus den Merkmalsbeschreibungen der auf den Vorrichtungsanspruch 1 rückbezogenen Unteransprüche.

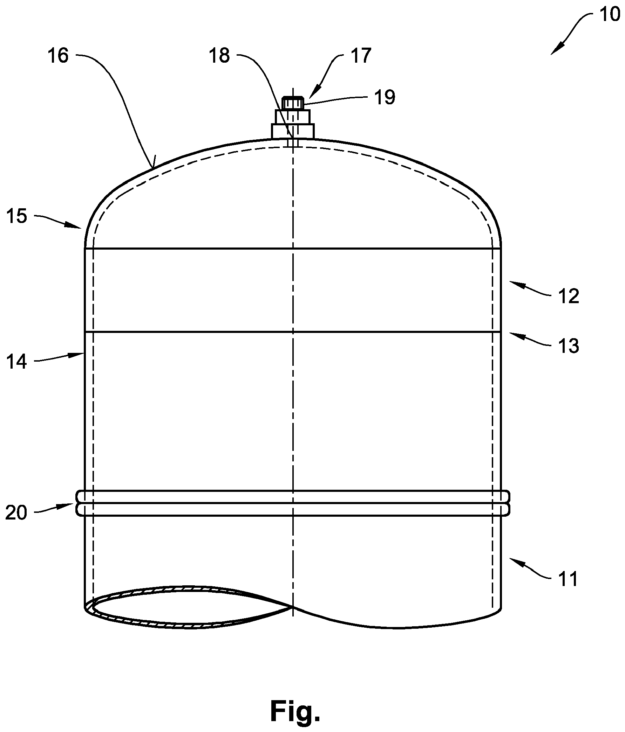

Nachfolgend wird eine bevorzugte Ausführungsform der Erfindung unter Bezugnahme auf die beigefügte Zeichnung näher erläutert.

Die **Fig.** zeigt eine schematische Teilansicht einer Anordnung 10 von einer Seite, umfassend ein Rohrleitungssystem, von dem hier nur ein Kunststoff-Rohrleitungselement 11 teilweise gezeigt ist, und eine endseitig an dem Rohrleitungselement 11 angeordnete, rotationssymmetrisch ausgebildete Kappe 12, wobei ein Kunststoff-Kappenkörper 13 der Kappe 12 eine hier nicht gezeigte Öffnung des Rohrleitungselements 11 fluiddicht verschließt. Der Kappenkörper 13 weist einen zylinderförmigen Abschnitt 14 auf, wobei ein Durchmesser des Abschnitts 14 einem Durchmesser des Rohrleitungselements 11 entspricht. Weiter weist der Kappenkörper 13 einen konvexen Abschnitt 15 mit einer axialseitig konvexen Fläche 16 auf. Dabei ist der Abschnitt 14 einstückig mit dem Abschnitt 15 ausgebildet. Weiter weist die Kappe 12 einen Anschlussstutzen 17 auf, welcher in einer in einem Maximum 18 der konvexen Fläche 16 vorgesehenen, hier nicht gezeigten Bohrung herstellerseitig durch Schweißen befestigt ist. Alternativ kann der Anschlussstutzen 17 auch mittels einer Klemmkupplung an dem Kappenkörper 13 befestigt sein. Der Anschlussstutzen 17 weist ein als ein Außengewinde ausgebildetes Gewinde 19 auf und ist zum Anschließen einer hier nicht gezeigten Vorrichtung zur Durchführung einer Druckprüfung bei dem Rohrleitungssystem ausgebildet. Der Abschnitt 14 ist mit dem Rohrleitungselement 11 durch Heizelementstumpfschweißen unter Ausbildung eines Schweißwulstes 20 stoffschlüssig verbunden. Alternativ kann der Abschnitt 14 mit dem Rohrleitungselement 11 auch mittels einer Klemmkupplung verbunden sein.

## Patentansprüche

1. Kappe (12) zur zumindest zeitweiligen Anordnung an einem Kunststoff-Rohrleitungselement (11), wobei die Kappe einen Kunststoff-Kappenkörper (13) aufweist, welcher bei der Anordnung der Kappe an dem Rohrleitungselement eine Öffnung des Rohrleitungselements verschließt,
**dadurch gekennzeichnet,**
**dass** die Kappe einen herstellerseitig an dem Kappenkörper angeordneten Anschlussstutzen (17) aufweist, welcher zum Anschließen einer Vorrichtung zur Durchführung einer Druckprüfung ausgebildet ist.

2. Kappe nach Anspruch 1,
**dadurch gekennzeichnet,**
**dass** die Kappe (12) dazu ausgebildet ist, stoffschlüssig, insbesondere durch Heizelementstumpfschweißen und/oder Heizwendelschweißen, und/oder kraftschlüssig, insbesondere mittels einer Klemmkupplung, an dem Rohrleitungselement (11) befestigt zu werden.

3. Kappe nach Anspruch 1 oder 2,
**dadurch gekennzeichnet,**
**dass** die Kappe (12) dazu ausgebildet ist, an dem aus einem Polyolefinmaterial, insbesondere PE 100, PE 100 RC, PE-RT, PP-B, PP-H, PP-R und/oder PP-RCT, und/oder PA-U ausgebildeten Rohrleitungselement (11) angeordnet zu werden.

4. Kappe nach einem der vorangehenden Ansprüche,
**dadurch gekennzeichnet,**
**dass** die Kappe (12) dazu ausgebildet ist, an dem ein Standard Dimension Ratio (SDR) von 5, 7,4, 11, 13,6, 17, 17,6, 26 oder 33 aufweisenden Rohrleitungselement (11) angeordnet zu werden.

5. Kappe nach einem der vorangehenden Ansprüche,
**dadurch gekennzeichnet,**
**dass** der Kappenkörper (13) abschnittsweise konvex ausgebildet ist.

6. Kappe nach einem der vorangehenden Ansprüche,
**dadurch gekennzeichnet,**
**dass** der Kappenkörper (13) aus einem Polyolefinmaterial, insbesondere PE 100, PE 100 RC, PE-RT, PP-B, PP-H, PP-R und/oder PP-RCT, und/oder PA-U ausgebildet ist.

7. Kappe nach einem der vorangehenden Ansprüche,
**dadurch gekennzeichnet,**
**dass** der Anschlussstutzen (17) ein Gewinde (20) aufweist.

8. Kappe nach einem der vorangehenden Ansprüche,
**dadurch gekennzeichnet,**
**dass** der Anschlussstutzen (17) stoffschlüssig, insbesondere durch Heizelementschweißen und/oder Heizwendelschweißen, und/oder kraftschlüssig, insbesondere mittels einer Klemmkupplung, an dem Kappenkörper (13) befestigt ist.

9. Anordnung (10), umfassend ein Rohrleitungssystem aus zumindest zwei miteinander verbundenen Kunststoff-Rohrleitungselementen (11) und eine an einem der Rohrleitungselemente angeordnete Kappe (12) nach einem der vorangehenden Ansprüche.

10. Verwendung einer Kappe (12) zur zumindest zeitweiligen Anordnung an einem Kunststoff-Rohrleitungselement (11) zwecks Durchführung einer Druckprüfung, wobei die Kappe einen Kunststoff-Kappenkörper (13) aufweist, welcher bei der Anordnung der Kappe an dem Rohrleitungselement eine Öffnung des Rohrleitungselements verschließt, wobei die Kappe einen herstellerseitig an dem Kappenkörper angeordneten Anschlussstutzen (17) aufweist, welcher zum Anschließen einer Vorrichtung zur Durchführung der Druckprüfung ausgebildet ist.

11. Verfahren zur Durchführung einer Druckprüfung bei einem Rohrleitungssystem, wobei an zumindest einem Kunststoff-Rohrleitungselement (11) des Rohrleitungssystems zumindest zeitweilig eine Kappe (12) angeordnet wird, derart, dass eine Öffnung des Rohrleitungselements von einem Kunststoff-Kappenkörper (13) der Kappe verschlossen wird,
**dadurch gekennzeichnet,**
**dass** an einem herstellerseitig an dem Kappenkörper angeordneten Anschlussstutzen (17) der Kappe eine Vorrichtung zur Durchführung einer Druckprüfung angeschlossen wird, wobei mittels der Vorrichtung eine Druckprüfung durchgeführt wird.

12. Verfahren nach Anspruch 11,
**dadurch gekennzeichnet,**
**dass** die Kappe (12) stoffschlüssig, insbesondere durch Heizelementstumpfschweißen und/oder Heizwendelschweißen, und/oder kraftschlüssig, insbesondere mittels einer Klemmkupplung, an dem Rohrleitungselement (11) befestigt wird.

13. Verfahren nach Anspruch 11 oder 12,
**dadurch gekennzeichnet,**
**dass** das Rohrleitungselement (11) mit einem weiteren Rohrleitungselement des Rohrleitungssystems verbunden und nachfolgend die Kappe (12) an dem Rohrleitungselement angeordnet wird oder dass die Kappe an dem Rohrleitungselement angeordnet und nachfolgend das Rohrleitungselement mit einem weiteren Rohrleitungselement des Rohrleitungssystems verbunden wird.

14. Verfahren nach einem der Ansprüche 11 bis 13,
**dadurch gekennzeichnet,**
**dass** die Kappe (12) nach der Durchführung der Druckprüfung von dem Rohrleitungselement (11), insbesondere durch eine spanende Bearbeitung, entfernt wird.

15. Verfahren nach einem der Ansprüche 11 bis 14,
**dadurch gekennzeichnet,**
**dass** der Anschlussstutzen (17) der an dem Rohrleitungselement (11) dauerhaft verbleibenden Kappe (12) mittels eines Verschlussdeckels der Kappe dauerhaft verschlossen wird.
